Europäisches Patentamt

European Patent Office

Office européen des brevets

(19)

(11) EP 0 559 437 B1

(12) **EUROPEAN PATENT SPECIFICATION**

(45) Date of publication and mention
of the grant of the patent:
**09.12.1998 Bulletin 1998/50**

(51) Int Cl.$^6$: **C08J 5/24**, B29C 70/18

(21) Application number: **93301587.7**

(22) Date of filing: **02.03.1993**

(54) **Cloth prepreg and process for producing it**

Gewebe-Prepreg und Verfahren zu seiner Herstellung

Tissu préimpregné et son procédé de production

(84) Designated Contracting States:
**DE FR GB**

(30) Priority: **02.03.1992 JP 80522/92**

(43) Date of publication of application:
**08.09.1993 Bulletin 1993/36**

(73) Proprietor: **TORAY INDUSTRIES, INC.**
**Tokyo 103-8666 (JP)**

(72) Inventors:
• **Kishi, Hajime, c/o Ehime Plant of Toray Ind.,Inc.**
**Ehime 791-31 (JP)**
• **Odagiri,Nobuyuki,**
**c/o Ehime Plant of Toray Ind.Inc**
**Ehime 791-31 (JP)**
• **Tazaki, Tokuo, c/o Ehime Plant of Toray Ind. Inc.**
**Ehime 791-31 (JP)**

• **Nagata, Hideo, c/o Ehime Plant of Toray Ind. Inc.**
**Ehime 791-31 (JP)**
• **Terashita, Takeshi, c/o Ehime Plant of Toray Ind.**
**Ehime 791-31 (JP)**

(74) Representative: **Coleiro, Raymond et al**
**MEWBURN ELLIS**
**York House**
**23 Kingsway**
**London WC2B 6HP (GB)**

(56) References cited:
**EP-A- 0 262 891**      **EP-A- 0 351 028**
**EP-A- 0 434 013**      **DE-A- 2 825 191**

• **DATABASE WPIL Derwent Publications Ltd.,**
**London, GB; AN 90-258317 [34] & JP-A-2 182 409**
**(MATSUSHITA ELC. WORKS) 17 July 1990**

## Description

The present invention relates to a cloth prepreg and process for producing it. More particularly, the present invention relates to a cloth prepreg which gives a fiber-reinforced plastic (hereinafter also referred to as "FRP") having high toughness and high modulus of elasticity as well as high thermal resistance, low water absorption and good solvent resistance, and which hardly forms pores in the FRP plate prepared by the so called honeycomb co-curing using the prepreg, and to a prepreg which gives an FRP having a good burn-through property.

Epoxy resins are widely used in various industrial fields in molded articles, laminated articles, adhesives, sealants and the like exploiting their excellent mechanical properties and high chemical resistance. Fiber-reinforced composite materials which have reinforcing fibers and matrix resins as indispensable constituents are used as structural materials of airplanes, automobiles and the like, and epoxy resins are widely used therein. In particular, carbon fiber-reinforced plastics (CFRP) are conventionally used as structural materials of airplanes. For example, EP-A-0351028 discloses a cloth prepreg comprising a resin composition including an epoxy resin, a curing agent, a particulate modifier, which may be a rigid rubber, and reinforcing fibers, which may be carbon fibers and which may be in the form of tows forming a unidirectional tape or woven cloth. To reduce the weight of the airplanes, honeycomb sandwich panel structures are often employed. The honeycomb sandwich panel structure is prepared by laying up prepregs on both sides of a honeycomb core made of aramide paper or the like (in some cases, via adhesive films) and carrying out simultaneously curing of the prepregs and adhesion of prepregs to a honeycomb core (this curing is called honeycomb co-curing). Thus, good co-curing properties are demanded for the prepregs.

It is also demanded that pores be not formed in the FRPs of the honeycomb sandwich panel. Since no pressure is applied to the regions of the prepregs on and under the inner space of the hexagonal cells in the honeycomb core, pores are likely to be formed in the interlayer zones and within one prepreg layer. If a molded plate having such pores is used to constitute a spoiler of an airplane, water is accumulated in the pores and when the airplanes flies at high altitude, the water is frozen to crack the skin (i.e., FRP of the sandwich panel). By repeating this, water comes to enter the honeycomb core and the physical properties of the panel are degraded, so that safe operation of the airplane is jeopardized. In other words, if the porosity of the FRPs are high, the reliability as a fiber-reinforced composite material is impaired.

There is the following prior art concerning the prepreg employing carbon fiber as reinforcing fibers and concerning matrix resins, which are designed to be used for honeycomb co-curing.

JP-B-63-030925 and JP-A-01-029814 disclose the following epoxy resin composition by which good direct adhesion between the prepregs and the honeycomb core and good composite properties of the cured plate as a surface material, especially high interlayer shearing strength (ILSS) are attained. That is, as the epoxy resin, three types of epoxy resin, that is, bisphenol A type, novolak type and glycidylamine type, are selected. The resin composition further comprises a reaction product between a liquid butadiene-acrylonitrile copolymer having carboxyl groups at both ends and a glycidylamine type epoxy resin, as well as nitrile rubber and dicyandiamide as a curing agent. The content of each component is made within a prescribed range by which the above-mentioned properties are stated to be attained. JP-A-62-028167 discloses as a matrix resin suited for hybrid reinforcing fibers including carbon fibers and aromatic polyamide fibers, a composition comprising an epoxy resin, a reaction product between a liquid butadiene-acrylonitrile copolymer having carboxyl groups at both ends and an epoxy resin, and a dicyandiamide, as well as a liquid or semi-solid polyamide having an amino group at its end. JP-A-58-082755, JP-A-58-083022 and JP-A-58-083031 disclose a composition containing a reaction product between a liquid butadiene-acrylonitrile copolymer having carboxyl groups at both ends and an epoxy resin, and both dicyandiamide and diaminodiphenylsulfone as curing agents, which composition promotes direct adhesion between the prepregs and the honeycomb core, especially at a high temperature.

JP-A-57-021427 and JP-A-57-021450 disclose a prepreg prepared by impregnating into fibers a resin solution obtained by dissolving a composition containing an epoxy resin, a reaction product between liquid butadiene-acrylonitrile copolymer having carboxyl groups at both ends and an epoxy resin, nitrile rubber and a curing agent represented by dicyandiamide, in acetone-methyl Cellosolve mixed solvent or the like, which prepreg has excellent adhesion strength, high impact strength and high bending strength to the honeycomb sandwich panel.

JP-A-57-049646 discloses a prepreg employing a resin composition comprising an epoxy resin, nitrile rubber and a high molecular epoxy resin having a molecular weight of not less than 10,000, which prepeg exhibits good direct adhesion to the honeycomb core, so as to give high adhesion strength and high bending strength to the honeycomb sandwich panel. In the example thereof, dicyandiamide is used as a curing agent and prepregs are prepared by dissolving the composition in acetone-methyl Cellosolve mixed solvent or the like.

JP-A-58-084825 discloses a prepreg in which an epoxy resin composition containing a bisphenol A type epoxy resin, an urethane-modified epoxy resin, an epoxy resin having N,N-diglycidylamino group, a brominated bisphenol A type epoxy resin and dicyandiamide is impregnated. The honeycomb sandwich panel employing this prepreg is said to have excellent high heel resistance and high bending strength.

However the above-mentioned prior art does not aim at reducing the porosity in the interlayer zones.

Furthermore, if diaminodiphenyl sulfone alone is used as a curing agent which gives high thermal resistance, pores are much more easily formed in the interlayer zones than in cases where dicyandiamide is used as a curing agent, and this problem is very difficult to solve.

Accordingly, the present invention seeks to provide a prepreg which hardly forms pores in the resultant cured FRP plates even when diaminodiphenylsulfone is used as a curing agent, which gives an FRP having high toughness and high modulus of elasticity as well as high thermal resistance, low water absorption and good solvent resistance, which has good tackiness and drapability and which gives an FRP having a good burn-through property, that is, a property to prevent the penetration of flame during fire, which is important for interior materials.

The present invention provides a cloth prepreg comprising (1) a resin composition including an epoxy resin, a curing agent and a solid rubber, which solid rubber is present in the composition in an amount of 3-12 parts by weight per 100 parts by weight of the total weight of the composition and which resin composition has a complex coefficient of viscosity $\eta_{0.5}$ determined using the plate-plate viscometer having a plate diameter of 1.798 cm and a gap between the plates of 0.5 mm at 80°C under a vibration frequency of 0.5 Hz during heating from 50°C at a rate of 1.5°C/min of 100-1500 poise, and has a minimum complex coefficient of viscosity $\eta_{min}$ determined using the said plate-plate viscometer at 80°C under a vibration frequency of 0.5 Hz during heating from 50°C at a rate of 1.5°C/min of 50-300 poise and (2) a woven fabric made of reinforcing fibers, which woven fabric has warp and weft yarns each made of multifilament carbon fibers, the widths W (mm) and thicknesses D (denier) of the warp and weft yarns satisfying the equation:

$$W = K \cdot (D/\rho)^{5/9}$$

(wherein K represents $3.5 \times 10^{-2}$ - $10.0 \times 10^{-2}$ (mm·D$^{-5/9}$) and $\rho$ represents the specific gravity of the carbon fibers), and wherein the said woven fabric has a cover factor $K_c$ of 90.0 - 99.8%, the meshes of the woven fabric being such that said prepreg has a cover factor $K_p$ of 97 - 99.9% and at least as high as the cover factor $K_c$. The desired cover factor may be achieved by crushing of the meshes.

The present invention further provides a process of producing the cloth prepreg, comprising the step of impregnating a resin composition containing an epoxy resin, a curing agent and a solid acrylonitrile-butadiene rubber having a functional group and not having a cross-linked structure into a woven fabric having warp and weft yarns each made of multifilament carbon fibers, the widths W (mm) and thickness D (denier) of the warp and weft yarns satisfying the equation:

$$W = K \cdot (D/\rho)^{5/9}$$

(wherein K represents $3.5 \times 10^{-2}$ - $10.0 \times 10^{-2}$ (mm·D$^{-5/9}$) and $\rho$ represents the specific gravity of the carbon fibers), the woven fabric having a cover factor $K_c$ of 90.0 - 99.8%.

The cloth prepreg of the present invention does not substantially form pores in the cured FRP plates when subjected to honeycomb co-curing, and gives FRP having high toughness, high modulus of elasticity, as well as high thermal resistance, low water absorption and high solvent resistance. The prepreg also has good tackiness and drapability. Further, the cloth prepreg gives an FRP having a good burn-through property, that is, a property to prevent the penetration of flame during fire, which is important for interior materials.

Reference is now made to preferred embodiments.

A component constituting the epoxy resin composition used in the present invetion is an epoxy resin. The epoxy resin has not less than two epoxy groups on average per one molecule.

Preferred examples of epoxy resins which are derived from amines include tetraglycidyl diaminodiphenylmethane, triglycidyl-p-aminophenol, triglycidyl-m-aminophenol and triglycidyl aminocresol. Among these, tetraglycidyl diaminodiphenylmethane is especially preferred as a resin for composite material for a structural material of airplanes because it has excellent thermal resitance.

Preferred examples of epoxy resins derived from phenols include bisphenol A type epoxy resins, bisphenol F type epoxy resins, bisphenol S type epoxy resins, phenol novolak type epoxy resins, cresol novolak type epoxy resins and resorcinol type epoxy resins. Since liquid bisphenol A type epoxy resins and bisphenol F type epoxy resins have low viscosities, they are suited for blending other epoxy resins and additives.

Preferred examples of epoxy resins derived from compounds having carbon-carbon double bonds include alicyclic epoxy resins. Brominated epoxy resins obtained by brominating these alicyclic epoxy resins are also preferred since the water absorption of the resin is decreased and environment resistance is promoted.

The epoxy resin may be a mixture of two or more epoxy resins and may contain a mono-epoxy compound. The combination of a glycidylamine type epoxy resin and a glycidyl ether type epoxy resin is preferred because it simultaneously satisfies good thermal resistance, water resistance and processability.

In view of the balance of heat resistance, water resistance and processability, the combination of the following epoxy resins in the amounts shown is especially preferred.

| | |
|---|---|
| Bisphenol A type epoxy resin | 10 - 60 wt% |
| Brominated bisphenol A type epoxy resin | 0 - 30 wt% |
| Tetraglycidyldiaminodiphenyl methane | 10 - 40 wt% |
| Bisphenol F type epoxy resin | 5 - 40 wt% |

Another component constituting the epoxy resin composition used in the present invention is a curing agent. Any compound having active groups which can react with epoxy group may be employed as the curing agent, for example aromatic amine curing agents, acid anhydride curing agents, dicyandiamide curing agents and novolak curing agents.

Compounds having amino groups, acid anhydride groups, azide groups and hydroxy groups may be preferably be employed.

For example, dicyandiamide , various isomers of diaminodiphenyl sulfone, aminobenzoates, various acid anhydrides, phenol novolak resins and cresol novolak resins may be employed. Dicyandiamide is preferred because it gives long shelf-life of prepreg. If an aromatic diamine is used as a curing agent, cured epoxy resin having good thermal resistance can be obtained. In particular, various isomers of diaminodiphenyl sulfone are best preferred in the present invention since they give cured resins with good thermal resistance. Diaminodiphenyl sulfone may preferably be used in an amount such that the amount of its active hydrogen is 0.7 - 1.2 equivalent with respect to the amount of the epoxy groups of the epoxy resin. As the aminobenzoates, trimethyleneglycol-di-p-aminobenzoate and neopentylglycol-di-p-aminobenzoate may preferably be used. Although the resins obtained by using those curing agents have lower thermal resistances than those obtained by using diaminodiphenylsulfone, since they excel in tensile strength and toughness, they may be selected depending on the intended use. If an acid anhydride represented by phthalic anhydride is used as a curing agent, cured resin with good thermal resistance is obtained, and an epoxy resin composition having low viscosity and so having excellent processability can be obtained. A phenol novolak resin or a cresol novolak resin may also preferably be used as a curing agent since ether bonds having good hydrolysis resistance are introduced into the molecular chains, so that the water resistance of the cured resin is promoted.

Further, various curing catalysts may also be employed together with the above-mentioned curing agents. A representative example of the curing catalysts is monoethylamine complex of trifluoroboron. Cyanate resins (triazine resins) may also be employed together with the epoxy resin. In this case, a curing reaction takes place between the cyanate and the epoxy groups, so that a cured resin with low water absorption can be obtained.

The epoxy resin composition used in the present invention further comprises a solid rubber; ie a rubber which does not have flowability at room temperature. The material of the rubber may be any elastomer.

By adding the solid rubber to the epoxy resin, a resin having high viscosity and high thixotropic property is obtained. During the fabrication, the matrix resin is in a quiescent state to which shearing force is not applied. The high thixotropic property means that the viscosity of the matrix resin is high in such a quiescent state. By virtue of this property of the resin, the formation of pores during the fabrication can be reduced.

It should be noted that an epoxy resin composition having high thixotropic property may also be obtained by using a solid rubber which does not have a cross--linked structure, if an appropriate amount is used. This is also a preferred mode of the present invention.

Further, the solid rubber which does not have a cross-linked structure has relatively low viscosity, so that if a woven fabric of carbon fibers which satisfy the below-described specific equation and which have the below-described specific cover factor $K_c$ is used as a reinforcing fabric, the object of the present invention may easily be attained. This is also a preferred mode of the present invention.

By the addition of the solid rubber, adhesiveness and flexibility of the resin composition are also promoted, so that the tackiness and drapability of the prepreg, which are important characteristics for prepregs, are promoted.

The solid rubber used in the present invention may preferably have a functional group which reacts with the epoxy resin or the curing agent. By this, the solvent resistance and mechanical properties of the cured resin are promoted. Especially preferred functional group is carboxylic group.

It is also preferred to add polyether sulfones to the epoxy resin composition, since the viscosity of the resin composition as well as the tackiness and drapability of the prepreg may easily be controlled. In view of the compatibility with the epoxy resin, polyether sulfones having hydroxyl group at the terminals are preferred.

The content of the solid rubber in 100 parts by weight of the matrix resin composition may preferably be 3 - 12 parts by weight, more preferably 5 - 10 parts by weight, in view of preventing the too much decrease in the thermal resistance of the composite, and preventing the generation of pores due to the low viscosity of the resin. On the other hand, the content of the polyether sulfone in 100 parts by weight of the matrix resin composition may preferably be not more than 5 parts by weight, more preferably 1 - 4 parts by weight, in view of preventing prominent decrease in the tackiness and drapability of the prepreg.

In cases where the resin composition contains a solid rubber, such as a solid acrylonitrile-butadiene rubber, having a weakly cross-linked structure (i.e. cross-linked to such a degree that the rubber is swollen by a solvent but not dissolved in the solvent), the resin composition may preferably have a complex coefficient of viscosity $\eta_{0.02}$ measure at 80°C under a vibration frequency of 0.02 Hz of not less than 5000 poise, more preferably not less than 20,000 poise, in view of keeping high viscosity in the quiescent state so as to reduce the porosity during the fabrication of the prepreg.

The complex coefficient of viscosity may be determined as follows using MR-3 Soliquid Meter commercially available from Rheology Co., Ltd.

That is, a plate-plate type (parallel plate type) system employing plates having a diameter of 1.798 cm and a gap between the plates of 0.5 mm is used. The measuring atmosphere is kept at 80°C. A sample is filled between the plates, and one of the plates is vibrated with a prescribed frequency to an amplitude of 1°. From the torque and phase difference generated by the vibration, the complex coefficient of viscosity is determined.

By measuring the complex coefficient of viscosity under the frequency from 0.02 - 2 Hz, the frequency dependence of the complex coefficient of viscosity can be determined.

Especially in cases where the resin composition contains the solid rubber which does not have a cross-linked structure, in view of promoting impregnation property of the prepreg while keeping a good film coating property and while reducing the porosity, the resin composition may preferably have a complex coefficient of viscosity $\eta 0.5$ determined at 80°C under the vibration frequency of 0.5Hz during heating from 50°C at a rate of 1.5°C/min (hereinafter referred to as "complex coefficient of viscosity $\eta 0.5$ at 80°C" for short) of 100 - 1500 poise, and have a minimum complex coefficient of viscosity $\eta$ min determined at 80°C under a vibration frequency of 0.5 Hz during heating from 50°C at a rate of 1.5°C/min of 50 - 300 poise.

In a cloth prepreg in accordance with the invention, the woven fabric is made of carbon fibers, satisfies the equation $w = K \cdot (D/\rho)^{5/9}$ and has a cover factor $K_c$ of 90.0 - 99.8% as described below in detail. In such a prepreg it is preferred to include a solid rubber not having a cross-linked structure, since especially advantageous effects are obtained.

The reinforcing fibers constituting the woven fabric is carbon (including graphite) fiber, which is used as an advanced composite material having good thermal resistance and tensile strength and which has high specific strength and high specific elastic modulus. Thus, the fibers largely contribute to the light weight of the prepreg.

Although any type of carbon fibers and graphite fibers may be employed depending on the intended use, high strength, high elongation carbon fibers having a tensile strength of not less than 350 kgf/mm$^2$ and a tensile elongation of not less than 1.5% are best preferred.

The reinforcing woven fabric made of the reinforcing fibers may be a conventional two-dimensional woven fabric. Biaxially woven fabrics having a fabric construction in which warp and weft yarns cross at right angles, such as a plain weave, twill or satin are preferred.

For reducing the porosity, the reinforcing woven fabric has warp and weft yarns made of multifilament carbon fibers, the widths W (mm) and thicknesses D (denier) of the warp and weft yarns satisfying the equation:

$$W = k \cdot (D/\rho)^{5/9}$$

(wherein K represents 3.5 x 10$^{-2}$ - 10.0 x 10$^{-2}$ (mm$\cdot$D$^{-5/9}$) and $\rho$ represents the specific gravity of the carbon fibers), and has a cover factor $K_c$ of 90.0 - 99.8%.

The cover factor $K_c$ is the cover factor of the woven fabric, which relates to the size of the mesh of the woven fabric. The cover factor $K_c$ may be determined as follows. That is, for a given region having an area $S_1$ on a woven fabric, the cover factor, $C_f$ is defined by the equation:

$$C_f = [(S_1 - S_2)/S_1] \times 100$$

where $S_2$ is the open space as hereinafter explained. $C_f$ is determined for an optional 10 such regions and the arithmetic average is defined as the cover factor $K_c$. The larger the cover factor $K_c$, the greater is the opening of the filaments, the enlargement of the width of the filaments and the flattening of the filaments, and the smaller the mesh of the woven fabric.

In order to avoid the formation of a region in the skin of the composite, in which carbon fibers do not exist, in which the amount of resin is too great, or in which voids are contained, it seems that the cover factor $K_c$ is preferably 100%, that is, the meshes are completely crushed. However, in such a woven fabric, the filaments are too self-restrained and the freedom of the movement of the filaments is too small, so that the prepreg has poor drapability and wrinkles are likely to be formed. Thus, it is preferred to provide a very small clearance among the filaments so as to assure freedom in deforming. In view of the balance between the degree of opening, width-enlargement and flattening of the filaments and the drapability, the upper limit of the cover factor is 99.8%

The specific method for measuring the cover factor $K_c$ of the woven fabric may be as follows:

First, using a stereoscopic microscope, e.g., stereomicroscope SMZ-10-1 commercially available from Nikon, a photograph of the surface of the fabric is taken while illuminating the back side of the fabric. Thus, in the photograph, the transmitted light pattern is shown, wherein the filaments are black and meshes are white. The intensity of the illumination light is so controlled that halation does not occur. In the examples hereinbelow described, the light from the double arm fiber commercially available from Nikon is used after reflection by an acryl plate. The magnification of the photograph is set to not less than 10 magnification so that 2-20 warp and weft yarns are present in the photograph, respectively. The obtained photograph is then photographed using a CDC (charged coupled device) camera and the image is then converted to digital data indicating white and black. The data are stored in a memory and then processed with an image processing apparatus to calculate the $C_f$ according to the above-mentioned equation from the total area $S_1$ and the total area $S_2$ of the white portions. The above-mentioned procedure is repeated 10 times for different portions of the same fabric, and the arithmetic average is defined as the cover factor $K_c$ of the fabric. In the Examples later described, Personal Image Analyzing System LA-525 commercially available from Pierce Co., Ltd. was used as the CCD camera and the image processing apparatus. The range of the image-analyzed area was from the left most of portion of the left most warp yarn to the right most portion of the right most warp yarn, and from the upper most portion of the upper most weft yarn to the lower most portion of the lower most weft yarn. Within this range, 2-20 warp and weft yarns are included, respectively. In the digital data, intermediate portions (between white and black) is included between the filaments (black portion) and meshes (white portion). To clearly allocate the intermediate portions to the filament portions or mesh portions, black tapes having a width of 6 mm were stuck on a transparent paper such that the tapes form a lattice. The lattice was normalized to have a cover factor of 75%. That is, the iris diaphragm of the CCD camera was set to 2.8, and the memory value of not more than 128 in the image analyzing system LA-525 was normalized to be filament portion (In this system, the light and shade of the white and black is recorded as memory values of 0 - 255 grades.)

Such a woven fabric can be produced for example, as follows:

First, a woven fabric having warp and weft yarns made of multifilaments of carbon fibers is produced by an ordinary weaving operation.

In view of the ease of weaving operation and of the uniformity of the dispersion of single fibers in a filament after the below-described operation for opening, width-enlarging and flattening operation, the number of single fibers constituting a filament may preferably be 3,000 - 30,000, and the thickness of the filament may preferably be 1,200 - 40,000 denier. The diameter of a single fiber may preferably be 5 - 10 µm. To make the opening, width-enlarging and flattening operation of the fibers easy and uniform, the number of twists of the filament may preferably be not more than 5 turns/m. Although from the view point of the opening, width-enlarging and flattening operation, filament yarns which are not twisted at all are preferred, but weaving non-twisted filament yarns may be somewhat difficult.

In order to attain easy and uniform operation for opening, width-enlarging and flattening, it is preferred to make the clearances among the warp and weft yarns (i.e., the meshes) larger than those of the ordinary fabric. The degree thereof depends on the width of the filaments, but the width of the meshes is preferably at least 1/5 of the width of the warps. When the width of the warps is 1.5mm, the best width of meshes is about 0.5mm.

The fabric tissue may preferably be plain weaving. It is best preferred that the warp and weft yarns have the same number of carbon fibers per yarn and have the same denier, and that the weaving densities of the warp and weft yarns be the same.

The weight of the woven fabric per unit area may optionally be selected. In view of ease and uniformity of the opening, width-enlarging and flattening operation, and in view of the shape-retaining ability and of the cover factor $K_c$, the weight of the woven fabric may preferably be 120 - 250 $g/m^2$, more preferably 140 - 195 $g/m^2$. This range of weight is especially preferred when the number of single fibers per yarn is 3,000. It should be noted that the weight per unit area is not changed before and after the opening, width-enlarging and flattening operation of the filaments.

The woven fabric is then subjected to the operation for opening, width-enlarging and flattening the filaments constituting the warp and weft yarns. This may be carried out by continuously feeding the woven fabric in the direction of the warp yarns and treating the woven fabric with water jets from a plurality of nozzles arranged in the direction of the weft yarns.

For ease of operation for opening, width-enlarging and flattening the filaments constituting the warp and weft yarns, the diameter of the holes in the nozzles may preferably be 0.05 - 0.5 mm, the nozzle pitch may preferably be not more than 1/3 of the pitch of the weft yarns of the fabric, and the beating force per one water jet may preferably be 0.01 - 3 gf.

By this operation, the warp and weft yarns may easily attain the widths and the thicknesses which satisfy the above described equation:

$$W = K \cdot (D/\rho)^{5/9}.$$

In the woven fabrics which satisfy this equation, the filaments are very uniformly opened, width-enlarged and flattened, and the bending at the intersections of warp and weft yarn is very small so that they excel in surface smoothness. It should be noted that "k" in the above-described equation relates to the degree and uniformity of the opening, width-enlarging and flattening of the filaments, and if the "k" is lower than the above-mentioned lower limit, the width-enlarging and flattening are not sufficiently progressed, so that the bending at the intersections of the filaments is large and the irregularity in the surface is also large. On the other hand, if the "k" is more than the above-described upper limit, the degree of opening of the filaments is uneven.

Among the woven fabrics described above, those in which the warp and weft yarns are made of multifilament yarns having the same number of single fibers per yarn and have the same denier, of which the fabric construction is a plain weave, whose warp and weft yarns satisfy the above-described equation

$$W = k \cdot (D/\rho)^{5/9}$$

whose weaving densities in the directions of the warp and weft are the same, whose weight is within the range of 120 - 250 g/m$^2$, and which has a cover factor $k_c$ within the range of 90 - 99.8% are especially suited for the present invention. If the number of single fibers per multifilament is 3000, the fabric is even more preferred.

In general, woven fabrics, except for those having specific fabric constructions, are highly anistoropic since the warps and wefts extend in directions which are at right angles. However, if the numbers of fibers per yarn in the warp and weft yarns, as well as the deniers of the warp and weft yarns are identical, the characteristics in the directions at right angles are the same. Therefore, by laying-up respective fabrics each shifting by a prescribed angle, e.g., 45°, pseudo-isotropic characteristics can easily be attained. Furthermore, having regard to the manufacturing process, if the number of single fibers per yarn and the denier of the warp and weft yarns are identical, and if the weaving densities are identical in the warp and weft directions, the size of a mesh is identical in the warp and weft directions. Therefore, by opening the multifilaments to the same degree in both the directions, the width-enlarging and flattening of the filaments can easily be attained.

Moreover, if the fabric construction is a plain weave, a thin and stable woven fabric in which the deformation of the meshes is small, may be obtained.

In addition, if the number of single fibers per yarn and the deniers of the warp and weft yarns are identical, if the weaving densities are identical in the warp and weft directions, and if the weight is 120 - 250 g/m$^2$, the cover factor $k_c$ is not too small, the bending of the multifilaments at the intersections is smaller, so that breakage by a concentration of stress can surely be avoided, and the irregularity in the surface is small; thus these are preferred features. Having regard to the manufacturing process, in a fabric having such a weight per unit area, the restraint by the filaments upon each other is small in spite of the fact that the fabric construction is a plain weave and the size of the mesh is small, so that the opening, width-enlarging and flattening of the filaments can be easily attained with water jets. The weight of the fabric may more preferably be 140 - 195 g/m$^2$.

As the resin composition to be impregnated into such a woven fabric that satisfies the above-described equation of $W = k \cdot (D/\rho)^{5/9}$ and has a cover factor $K_c$ of 90 - 99.8%, since resin compositions having relatively low viscosities are preferred to reduce the porosity, a resin composition containing an epoxy resin, a curing agent and a solid NBR which has a functional group and does not have a cross-linked structure is preferred.

It is more preferred that the resin composition just mentioned above has a complex coefficient of viscosity $\eta_{0.5}$ determined at 80°C under a vibration frequency of 0.5 Hz during heating from 50°C at a rate of 1.5°C/min of 100 - 1500 poise, and has a minimum complex coefficient of viscosity $\eta_{min}$ determined at 80°C under a vibration frequency of 0.5 Hz during heating from 50°C at a rate of 1.5°C/min of 50 - 300 poise.

For the purpose of controlling the viscosity of the resin, or improving physical properties of the composite, such as compression strength and toughness, the cloth prepreg of the present invention may contain particles of calcium carbonate, talc, mica, silica, carbon black, silicon carbide, alumina hydrate or the like.
The content of such particles is not restricted, but must not adversely affect the advantageous effects of the present invention. The content of the particles may usually be 0.1 to 3.0% based on the weight of the epoxy resin composition.

The cover factor $K_p$ of the cloth prepreg of the present invention is 97 - 99.9%. It should be noted that the cover factor $K_p$ is not the above-described cover factor $K_c$ of the woven fabric, but is the cover factor of the cloth prepreg after the resin composition is impregnated into the woven fabric.

If the cover factor $K_p$ is less than 97%, the degree of crushing of the meshes which are clearances formed between the warp and weft yarns of the reinforcing woven fabric is insufficient, so that pores are likely to be formed in the honeycomb fabricated plate, and the burn-through property, that is, a property to prevent the penetration of flame during fire, which is important for interior materials, is not promoted. On the other hand, of the cover factor $K_p$ is more than 99.9%, the drapability which is an important characteristic of a prepreg, is largely decreased.

In contrast, if the cover factor $K_p$ is within the range of 97-99.9%, the porosity of the honeycomb fabricated panel is largely decreased while retaining the good drapability intrinsic to the cloth prepreg.

Furthermore, in a cured plate obtained by curing the above-described cloth prepreg, the reinforcing fibers are uniformly distributed and the cover factor is large, so that the cured plate excels in the burn-through property, that is, its ability to prevent the penetration of flame during fire, which is important for interior materials.

The cover factor $K_p$ is determined by the same method as the above-described method for determining the cover factor $K_c$, except that the cloth prepreg is subjected to the measurement in place of the woven fabric.

The prepreg of the present invention may be prepared, in principle, by a conventional method for producing prepregs employing an epoxy resin as a matrix resin. Although the prepreg may be prepared by impregnating the reinforcing woven fabric with the resin composition after the resin composition is dissolved in an appropriate solvent (i.e, wet process), if the above-described epoxy resin composition is used, a prepreg having no porosity can be prepared by the non-solvent method (hot-melt method) by which pores are otherwise likely to be formed. Since the above-described epoxy resin has high viscosity and yet has a thixotropic property, the resin coating by the hot melt method is unexpectedly easy.

In view of preventing the reduction in strength due to voids and preventing the degradation of the physical properties of the composite due to the repeated freezing of water, the ratio B of the area occupied by the voids in an optional cross-section may preferably be not more than 0.5%.

The impregnation property can be evaluated by curing the prepreg under the conditions in which the matrix resin does not substantially flow during the curing reaction, observing a polished cross-section of the cured prepreg and determining the percentage of the area of the non-impregnated region.

To clearly distinguish non-impregnated region from impregnated region when a cross-section of the prepreg is observed, it is necessary to polish the cross-section. To this end, it is necessary to heat the prepreg to cure. However, if a thermosetting matrix is heated, the viscosity is once decreased with the raise of the temperature and flowing of the resin is observed. If the resin flows during the curing process, the resin flows into the regions which are not impregnated in the original prepreg, so that the impregnation property thus determined does not reflect the state of the original prepreg. Therefore, in the curing of the prepreg, the increase in the viscosity due to the reaction of the resin must be more than the decrease in the viscosity due to the raise of the temperature. This may be attained by gradually raising the temperature to cure the resin. For example, in cases where a resin mixture containing a mixture of glycidylamine type epoxy resin and bisphenol A type epoxy resin, and an equivalent amount of diaminodiphenylsulfone as a curing agent is used, the preferred rate of raising temperature is not more than 1°C/hour.

When a polished cross-section of the thus cured prepreg is observed with an optical microscope, the non-impregnated regions in the prepreg is observed as voids in which the matrix resin does not exist. The void content B is calculated by the following equation:

$$B = (b/a) \times 100 \ (\%)$$

(wherein "a" represents the area of an optional region in a photomicrograph of a cross-section and "b" represents the area occupied by voids).

The relationship between the void content B and the porosity P in the composite will now be described.

The methods for fabricating the composite using a prepreg include vacuum bag method, autoclave method using a vacuum bag and press method. Among these, to fabricate a composite with high performance, autoclave method using a vacuum bag is preferably employed.

Thus, a composite was prepared by the autoclave method using a vacuum bag, employing a prepreg whose void content B is known, and the optional region in an optional polished cross-section was observed with a microscope. As a result, a positive correlation was observed between the void content B and the porosity P in the composite. That is, if the void content B is small, the porosity P in the composite is small. Further, it was found that if the void content B is not more than 0.5%, by employing a prepreg which is appropriately flow-controlled, a composite having a porosity of substantially 0 can be obtained. Although the upper limit of the void content B of the more preferred range is 0.3%, it is not necessary to lower the void content B below the lower limit of 0.05%. If the void content B is unnecessarily low, in the wet method, a drying step at a high temperature for a long time is necessary to evaporate the solvent more, and in the hot-melt method, a higher temperature is necessary to decrease the viscosity of the resin, so that in both cases, the reaction of the resin is accelerated. As a result, the tackiness and drapability of the prepreg may deteriorate.

Preferred embodiments of the invention will now be described with reference to the following Reference Example, Examples and Comparative Example. Photomicrographs of the prepregs of some of the Examples have been taken and these are shown as accompanying drawings in which:-

Fig. 1 is a photomicrograph of a cross-section of the honeycomb sandwich panel prepared in Example 1 after polishing; and

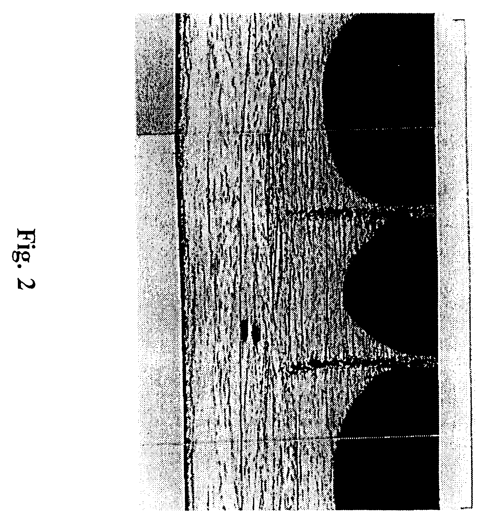

Fig. 2 is a photomicrograph of a cross-section of the honeycomb sandwich panel prepared in Example 3 after polishing.

In the following Examples and Comparative Examples, all parts are by weight unless otherwise specified; and names of components marked with a * are trade names of commercially available products.

Reference Example 1

Using "TORECA"* T300 filament yarns (average number of twisting: 0.8 turns/m, average diameter of single fiber: 7 μm, average number of fibers per filament yarn: 3000, denier: 1800 denier, specific gravity: 1.76) as warp and weft yarns, a woven fabric was prepared by plain weaving. The widths of each warp and weft yarn were 1.47 mm and 1.49 mm, respectively, and the size of the meshes was 0.57mm and 0.59 mm in the directions of the warp and weft, respectively. The weaving densities in the warp and weft directions were both 4.85 yarns/cm (warp pitch: about 2.06 mm). The weight of the fabric was 194 $g/m^2$ and the thickness of the fabric was 0.31 mm.

The above described woven fabric was made to run in the warp direction at a rate of 1.5 m/min and the opening, width-enlarging and flattening operation of the filament yarns was performed by using water jets. The diameter of the nozzle was 0.13 mm, the nozzle pitch was 0.6 mm and the beating force per one water jet was 0.6 gf.

In the thus treated woven fabric, the filament yarns were well opened and the widths of the warp and weft yarns were enlarged to 1.71 mm and 1.91 mm, respectively. The thickness was 0.28 mm, and the cover factor $K_c$ was 99%. The obtained woven fabric was thin and the irregularities in the surface were very small. Furthermore, cutting of single fibers and generation of down were not observed.

Example 1

An epoxy resin composition having the following composition was prepared in a kneader.

| | |
|---|---|
| <Epoxy Resin> | |
| Brominated bisphenol A type Solid Epoxy (EPC152*) | 63.0 parts |
| Bisphenol A type Liquid Epoxy (EPC828*) | 127.0 parts |
| Tetraglycidyldiaminodiphenyl methane (ELM 434*) | 40.0 parts |
| Bisphenol F type Liquid Epoxy (EPC830*) | 20.0 parts |
| <Curing Agent> | |
| 4,4'-DDS (4,4'-diaminodiphenylsulfone) | 80.0 parts |
| <Solid Rubber> | |
| Carboxyl-terminated solid NBR (NIPOL 1072*) | 25.0 parts (7.0 wt%) |

During the process of heating this resin composition from 50°C at a rate of 1.5°C/min, the complex coefficient of viscosity $\eta_{0.5}$ measured at 80°C under a vibration frequency of 0.5 Hz was 700 poise and the minimum complex coefficient of viscosity $\eta_{min}$ was 90 poise.

This resin composition was heated at 80°C for a short time and was coated on a releasing paper to obtain a resin film.

This resin film was set in a prepreg machine and impregnation of the resin was performed from the both sides of the carbon fiber woven fabric prepared in Reference Example 1. The impregnation temperature was 100°C and the impregnation pressure was 4 $kgf/cm^2$ to obtain a prepreg with a resin content of 40%, having excellent tackiness and drapability were obtained. The cover factor $K_p$ of this prepreg was 99%. This prepreg was cured in a hot air oven by heating the prepreg to 180°C at a rate of 0.5 °C/hour. A photomicrograph of a polished cross-section of the cured prepreg was taken and the void content B was measured, which was 0.15%.

One prepreg thus obtained was placed on an aluminum plate to which a silicone-based releasing agent was applied. On the prepreg, another prepreg was placed such that the direction of warps of the reinforcing fabric of the prepreg was shifted by 45° from the direction of warps of the reinforcing fabric of the first placed prepreg. On the second prepreg, a honeycomb core made of aramide paper impregnated with a thermally resistant phenol resin, having a size of the inner space of the cells of 1/8 inch (about 3.2 mm) and having a thickness of 1/2 inch (about 12.7 mm) was placed. On the honeycomb core, the above-described two prepregs were laminated in the direction such that their reinforcing fabrics constitute the mirror image of the reinforcing fabrics of the above-mentioned first two prepregs under the honeycomb core. The entire structure was packed in a fluorine-contained resin film.

The resulting packed structure was placed in an autoclave and was heated to 180°C at a rate of 1.5°C/min under a pressure of 3 kgf/cm$^2$ while reducing the pressure in the pack. The structure was left to stand at this temperature for two hours to cure the epoxy resin of the cloth prepreg to form skins and to adhere the skins with the honeycomb core.

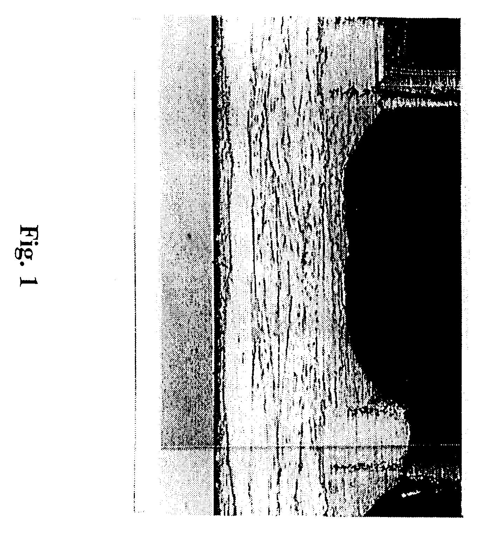

A cross-section of the thus obtained honeycomb sandwich panel was observed with a microscope, which is shown in Fig. 1. The porosity P was 0.01%.

Comparative Example 1

The same procedure as in Example 1 was repeated except that carbon fiber woven fabric "C07272z*" of which filaments are not opened was used as the reinforcing fabric. The cover factor $K_p$ was 96%. The porosity P of the obtained composite was 0.03%, which is inferior to that attained in Example 1.

The results of Example 1 and Comparative Example 1 are shown in Table 1.

Table 1

|  | Example 1 | Comparative Example 1 |
|---|---|---|
| Type of Carbon Fiber Fabric | Opened | Non-opened |
| Amount of "NIPOL 1072" Added(%) | 7 | 7 |
| Viscosity at 80 °C (poise) | 700 | 700 |
| Minimum Viscosity (poise) | 90 | 90 |
| Void Content B(%) in Prepreg | 0.15 | 0.6 |
| Porosity P(%) of Composite | 0.01 | 0.3 |

**Claims**

1. A cloth prepreg (1) comprising a resin composition including an epoxy resin, a curing agent and a solid rubber which does not have flowability at room temperature, which solid rubber is present in the composition, in an amount of from 3-12 parts by weight per 100 parts by weight of the resin composition and which resin composition has a complex coefficient of viscosity $\eta_{0.5}$ determined using a plate-plate viscometer having a plate diameter of 1.798 cm and a gap between the plates of 0.5 mm at 80°C under a vibration frequency of 0.5 Hz during heating from 50°C at a rate of 1.5°C/min of 100-1500 poise, and has a minimum complex coefficient of viscosity $\eta_{min}$ determined using the said plate-plate viscometer at 80°C under a vibration frequency of 0.5 Hz during heating from 50°C at a rate of 1.5°C/min of 50-300 poise temperature, and (2) a woven fabric made of reinforcing fibers, which woven fabric has warp and weft yarns each made of multifilament carbon fibers, the widths W (mm) and thicknesses D (denier) of the warp and weft yarns satisfying the equation:

$$W = k \cdot (D/\rho)^{5/9}$$

(wherein k represents $3.5 \times 10^{-2}$ - $10.0 \times 10^{-2}$ (mm·D$^{-5/9}$) and $\rho$ represents the specific gravity of the carbon fibers), and wherein the said woven fabric has a cover factor $K_c$ of 90.0 - 99.8%, the meshes of the said woven fabric being such that said prepreg has a cover factor $K_p$ of 97 - 99.9%, at least as high as the cover factor $K_c$, which cover factors $K_c$ and $K_p$ are the respective arithmetic averages of cover factors $C_f$ and $C_p$ determined for 10 op-tionally chosen regions of the fabric and prepreg respectively and each being defined by

$$C_f \text{ (or } C_p) = [(S_1 - S_2)/S_1] \times 100\%$$

where $S_1$ is the total area of the region and $S_2$ is the mesh space within the region as apparent from an area of white space in a photograph taken by a charge coupled device camera.

2. A cloth prepreg according to claim 1, wherein the said solid rubber is solid acrylonitrile-butadiene rubber.

3. A cloth prepreg according to claim 2, wherein the said solid rubber is a solid acrylonitrile-butadiene rubber having a functional group.

# EP 0 559 437 B1

**4.** A cloth prepreg according to claim 3, wherein the said functional group is a carboxylic group.

**5.** A cloth prepreg according to any preceding claim, wherein the said solid rubber is not cross-linked.

**6.** A cloth prepreg of any preceding claim, wherein the said resin composition has a complex coefficient of viscosity $\eta_{0.02}$ determined using a plate-plate type viscometer having a plate diameter of 1.798 cm and a gap between the plates of 0.5 mm and measured at 80°C under a vibration frequency of 0.02 Hz of not less than 5000 poise, and has a complex coefficient of viscosity $\eta_2$ determined using the said plate-plate type viscometer at 80°C under a vibration frequency of 2 Hz and a complex coefficient of viscosity $\eta_{0.02}$ which satisfy the equation:

$$\log\eta_{0.02} - \log\eta_2 \geq 0.5.$$

**7.** A cloth prepreg according to any preceding claim, wherein the said curing agent is at least one compound selected from aromatic amine curing agents, acid anhydride curing agents, dicyandiamide curing agents and novolak curing agents.

**8.** A cloth prepreg according to claim 7, wherein the curing agent is diaminodiphenyl sulfone.

**9.** A cloth prepreg according to any preceding claim, wherein the area occupied by voids in any given cross-section is not more than 0.5%.

**10.** A process for producing a cloth prepreg according to any one of claims 1 to 4, 7 and 8, comprising the step of impregnating a resin composition containing an epoxy resin, a curing agent and a solid acrylonitrile-butadiene rubber having a functional group and not having a cross-linked structure into a woven fabric having warp and weft yarns each made of multifilament carbon fibers, the widths W(mm) and thicknesses D (denier) of the said warp and weft yarns satisfying the equation:

$$W = k \cdot (D/\rho)^{5/9}$$

wherein k represents $3.5 \times 10^{-2}$ - $10.0 \times 10^{-2}$ (mm·D$^{-5/9}$) and $\rho$ represents the specific gravity of the carbon fibers, the said woven fabric having a cover factor $K_c$ of 90.0 - 99.8%.

**Patentansprüche**

**1.** Gewebe-Prepreg, das (1), eine Harzzusammensetzung umfaßt, die ein Epoxyharz, einen Härter und einen festen Kautschuk umfaßt, der bei Raumtemperatur nicht fließfähig ist, wobei der feste Kautschuk in der Zusammensetzung in einer Menge von 3 bis 12 Gewichtsteilen pro 100 Gewichtsteile der Harzzusammensetzung enthalten ist, und wobei die Harzzusammensetzung einen komplexen Viskositätskoeffizienten $\eta_{0.5}$ aufweist, der unter Verwendung eines Platten-Platten-Viskosimeters mit einem Plattendurchmesser von 1,798 cm und einem Abstand zwischen den Platten von 0,5 mm bei 80 °C bei einer Vibrationsfrequenz von 0,5 Hz beim Aufheizen von 50 °C weg mit einer Rate von 1,5 °C/min mit 100 bis 1.500 Poise ermittelt wurde, sowie einen minimalen komplexen Viskositätskoeffizienten $\eta_{min}$ aufweist, der unter Verwendung des Platten-Platten-Viskosimeters bei 80 °C bei einer Vibrationsfrequenz von 0,5 Hz beim Aufheizen von 50 °C weg mit einer Rate von 1,5 °C/min mit 50 bis 300 Poise ermittelt wurde, und (2) ein Gewebe aus Verstärkungsfasern, wobei der Webstoff Kett- und Schußfäden aufweist, die jeweils aus Multifil-Kohlefasern bestehen, wobei die Breite W (mm) und die Dicke D (Denier) der Kett- und Schußfäden der Gleichung

$$W = k \cdot (D/\rho)^{5/9}$$

genügen (worin k für $3,5 \times 10^{-2}$ - $10,0 \times 10^{-2}$ (mm·D$^{-5/9}$) steht und $\rho$ das spezifische Gewicht der Kohlefasern darstellt), und worin das Gewebe einen Deckfaktor $K_c$ von 90,0 bis 99,8 % aufweist, wobei die Maschen des Webstoffs so sind, daß das Prepreg einen Deckfaktor $K_p$, von 97 bis 99,9 % aufweist, der zumindest so hoch wie der Deckfaktor $K_c$ ist, wobei die Deckfaktoren $K_c$ und $K_p$ das jeweilige arithmetische Mittel von Deckfaktoren $C_f$ und $C_p$ sind, die

für 10 willkürlich gewählte Bereiche des Stoffs bzw. Prepregs ermittelt und jeweils als

$$C_f \text{ (oder } C_p) = [(S_1 - S_2)/S_1] \times 100 \%$$

definiert sind, worin $S_1$ die Gesamtfläche des Bereicns ist und $S_2$ die Maschenweite innerhalb des Bereichs ist, wie aus der Fläche des Freiraums in einem Photo ersichtlich, das mittels einer Ladungsspeicherelement-(CCD-) Kamera gemacht wird.

2. Gewebe-Prepreg nach Ansprucn 1, worin der feste Kautschuk fester Acrylnitril-Butadien-Kautschuk ist.

3. Gewebe-Prepreg nach Anspruch 2, worin der feste Kautschuk ein fester Acrylnitril-Butadien-Kautschuk mit einer funktionellen Gruppe ist.

4. Gewebe-Prepreg nach Anspruch 3, worin die funktionelle Gruppe eine Carboxylgruppe ist.

5. Gewebe-Prepreg nach einem der vorangegangenen Ansprüche, worin der feste Kautschuk nicht vernetzt ist.

6. Gewebe-Prepreg nach einem der vorangegangenen Ansprüche, worin die Harzzusammensetzung einen komplexen Viskositätskoeffizienten $\eta_{0,02}$ aufweist, der unter Verwendung eines Platten-Platten-Viskosimeters mit einem Plattendurchmesser von 1,798 cm und einem Anstand zwischen den Platten von 0,5 mm ermittelt wird und bei 80 °C bei einer Vibrationsfrequenz von 0,02 Hz als nicht weniger als 5.000 Poise gemessen wird, und das einen komplexen Viskositätskoeffizienten $\eta_2$, gemessen unter Verwendung dieses Platten-Platten-Viskosimeters bei 80 °C und einer Vibrationsfrequenz von 2 Hz, sowie einen komplexen Viskositätskoeffizienten $\eta_{0,02}$ aufweist, die folgender Gleichung genügen:

$$\log\eta_{0,02} - \log\eta_2 \geq 0,5.$$

7. Gewebe-Prepreg nach einem der vorangegangenen Ansprüche, worin der Härter zumindest eine Verbindung, ausgewählt aus aromatischen Amin-Härtern, Säureanhydrid-Härtern, Dicyandiamid-Härtern und Novolak-Härtern, ist.

8. Gewebe-Prepreg nach Anspruch 7, worin der Härter Diaminodiphenylsulfon ist.

9. Gewebe-Prepreg nach einem der vorangegangenen Ansprüche, worin die von Leerräumen eingenommene Fläche in jedem beliebigem Querschnitt nicht größer als 0,5 % ist.

10. Verfahren zur Herstellung eines Gewebe-Prepregs nach einem der Ansprüche 1 bis 4, 7 und 8, umfassend den Schritt des Hineinimprägnierens einer Harzzusammensetzung, die ein Epoxyharz, einen Härter und einen festen Acrylnitril-Butadien-Kautschuk umfaßt, der eine funktionelle Gruppe und keine vernetzte Struktur aufweist, in ein Gewebe mit Kett- und Schußfäden, die jeweils aus Multifil-Kohlefasern bestehen, wobei die Breite W (mm) und die Dicke D (Denier) der Kett- und Schußfäden der Gleichung

$$W = k \cdot (D/\rho)^{5/9}$$

genügen (worin k für $3,5 \times 10^{-2} - 10,0 \times 10^{-2}$ (mm·D$^{-5/9}$) steht und $\rho$ das spezifische Gewicht der Kohlefasern darstellt), wobei der Webstoff einen Deckfaktor $K_c$ von 90,0 bis 99,8 % aufweist.

**Revendications**

1. Préimprégné de tissu (1) comprenant une composition de résine incluant une résine époxy, un agent de durcissement et un catouchouc solide qui n'a pas d'aptitude à l'écoulement à température ambiante, lequel caoutchouc solide est présent dans la composition, en une quantité de 3 à 12 parties en poids pour 100 parties en poids de la composition de résine et laquelle composition de résine a un coefficient complexe de viscosité $\eta_{0,5}$ déterminé

en utilisant un viscosimètre plaque-plaque ayant un diamètre de plaque de 1,798 cm et une distance entre les plaques de 0,5 mm à 80°C sous une fréquence de vibration de 0,5 Hz pendant un chauffage à partir de 50°C à une vitesse de 1,5°C/mn de 100 à 1500 poises, et un coefficient complexe minimum de viscosité $\eta_{min}$ déterminé en utilisant ledit viscosimètre plaque-plaque à 80°C sous une fréquence de vibration de 0,5 Hz pendant un chauffage à partir de 50°C à une vitesse de 1,5°C/mn de 50 à 300 poises, et (2) un tissu tissé fait de fibres de renforcement, lequel tissu tissé a des fils de chaîne et de trame, chacun fait de fibres de carbone multifilamentaires, les largeurs W (mm) et épaisseur D (dernier) des fils de chaîne de trame satisfaisant l'équation :

$$W = k. (D/\rho)^{5/9}$$

où k représente 3,5 x 10⁻² à 10,0 x 10⁻² (mm.D⁻⁵/⁹) et ρ représente la densité spécifique des fibres de carbone, et où ledit tissu tissé a un facteur de couverture $K_c$ de 90,0 à 99,8 %, les mailles dudit tissu tissé étant telles que ledit préimprégné a un facteur de couverture $K_p$ de 97 à 99,9 %, au moins aussi élevé que le facteur de couverture $K_c$, lesquels facteurs de couvercle $K_c$ et $K_p$ sont les moyennes arithmétiques respectives des facteurs de couverture $C_f$ et $C_p$ déterminés pour 10 régions choisies optionnellement du tissu et du préimprégné respectivement et chacun étant défini par

$$C_f \text{ (ou } C_p) = [(S_1-S_2)/S_1] \text{ x } 100 \text{ %}$$

où $S_1$ est la surface totale de la région et $S_2$ est l'espace de maille dans la région comme apparent à partir d'une surface d'espace blanc dans une photographie prise par une caméra à dispositif couplé de charge.

2. Préimprégné de tissu selon la revendication 1, où ledit catouchouc solide est un caoutchouc acrylonitrile-butadiène solide.

3. Préimprégné de tissu selon la revendication 2, où ledit caoutchouc solide est un caoutchouc solide acrylonitrile-butadiène ayant un groupe fonctionnel.

4. Préimprégné de tissu selon la revendication 3, où ledit groupe fonctionnel est un groupe carboxylique.

5. Préimprégné de tissu selon l'une quelconque des revendications précédentes, où ledit catouchouc solide n'est pas réticulé.

6. Préimprégné de tissu selon l'une quelconque des revendications précédentes, où ladite composition de résine a un coefficient complexe de viscosité $\eta_{0,02}$ déterminé en utilisant un viscosimètre du type plaque-plaque ayant un diamètre de plaque de 1,798 cm et une distance entre les plaques de 0,5 mm et mesuré à 80°C sous une pression en vibration de 0,02 Hz non inférieur à 5000 poises, et a un coefficient complexe de viscosité $\eta_2$ déterminé en utilisant ledit viscosimètre du type plaque-plaque à 80°C sous une fréquence de vibration de 2 Hz et un coefficient complexe de viscosité $\eta_{0,02}$ qui satisfont l'équation :

$$\log\eta_{0,02} - \log\eta_2 \geq 0,5.$$

7. Préimprégné de tissu selon l'une quelconque des revendications précédentes, où ledit agent de durcissement est au moins un composé sélectionné parmi des agents de durcissement amine aromatique, des agents de durcissement anhydride d'acide, des agents de durcissement dicyandiamide et des agents de durcissement novolaque.

8. Préimprégné de tissu selon la revendication 7, dans lequel l'agent de durcissement est la diaminodiphényl sulfone.

9. Préimprégné de tissu selon l'une des revendications précédentes, où la surface occupée par les vides dans une section transversale donnée n'est pas supérieure à 0,5 %.

10. Procédé pour produire un préimprégné de tissu selon l'une quelconque des revendications 1 à 4, 7 et 8, comprenant l'étape d'imprégnation d'une composition de résine contenant une résine époxy, un agent de durcissement et un caoutchouc solide d'acrylonitrile-butadiène ayant un groupe fonctionnel et n'ayant pas une structure réticulée dans un tissu tissé ayant des fils de chaîne et de trame, chacun fait de fibres de carbone multifilamentaires, les largeurs W(mm) et les épaisseurs D (denier) desdits fils de chaîne et de trame satisfaisant l'équation :

$$W = k. \ (D/\rho)^{5/9}$$

où k représente $3,5 \times 10^{-2}$ à $10,0 \times 10^{-2}$ $(mm.D^{-5/9})$ et $\rho$ représente la densité spécifique des fibres de carbone, ledit tissu tissé ayant un facteur de couverture $K_c$ de 90,0 à 99,8 %.

# Fig. 1

Fig. 2